# EUROPÄISCHE PATENTSCHRIFT

(11) **EP 2 901 513 B1**
(45) Veröffentlichungstag und Bekanntmachung des Hinweises auf die Patenterteilung: **19.07.2017**
(21) Anmeldenummer: 13756323.5
(22) Anmeldetag: 31.08.2013
(51) Int. Cl.: H01M 2/20, H01M 2/32, H01R 4/62, H01R 11/28, H01M 2/30

(54) **VERBUNDSTOFF-ZELLENVERBINDER**
COMPOSITE CELL CONNECTOR
CONNECTEUR D'ÉLÉMENTS EN MATÉRIAU COMPOSITE

(30) Priorität: 28.09.2012 DE 102012019108
(43) Veröffentlichungstag der Anmeldung: 05.08.2015
(73) Patentinhaber: Diehl Stiftung & Co. KG, 90478 Nürnberg (DE)
(72) Erfinder: GLASMACHER, Mathias, 68799 Reilingen (DE)
(74) Vertreter: Diehl Patentabteilung
(86) Internationale Anmeldenummer: PCT/EP2013/002618
(87) Internationale Veröffentlichungsnummer: WO 2014/048536

(56) Entgegenhaltungen:
- DE-A1- 2 415 675
- DE-A1-102008 030 274
- DE-A1-102010 045 037
- DE-B3-102008 035 169
- DE-U1-202010 012 555
- GB-A- 589 936
- JP-A- 2002 151 045

## Beschreibung

Die Erfindung betrifft ein System aus Zellen und einem Mehrstoff-Zellenverbinder, wobei der Mehrstoff-Zellenverbinder an unterschiedliche Materialien aufweisende Pole der Zellen angeschlossen ist.

Zellenverbinder sind aus der DE 10 2010 013 351 A1 als Kontaktelemente für Ableiter galvanischer Zellen von Batterien und / oder Akkumulatoren mit Polpaaren aus unterschiedlichen elektrisch leitenden Materialien bekannt.

Dabei sind im Rahmen vorliegender Beschreibung unter den Polen die beiden aus der Zelle hervorstehenden, für die Verbindungstechnik zugänglichen Anschlüsse an die beiden, unterschiedliche Materialien aufweisenden, Elektroden in der Zelle zu verstehen; wobei es hier belanglos ist, ob die Pole einstückig mit den Elektroden ausgeführt oder Anschlüsse aus anderen Materialien sind. Üblicherweise bestehen die Pole aus unterschiedlichen Materialien.

Die Materialien der Verbundstoff-Zellenverbinder sollen sicherstellen, dass bei einer Zellen-Reihenschaltung zwischen den Materialien am jeweiligen Pol keine Unverträglichkeiten wie intermetallische Phasen, galvanische Spannungen oder Korrosionserscheinungen auftreten, die den Wirkungsgrad des Stromüberganges in den beziehungsweise aus dem Zellenverbinder beeinträchtigen würden. Auch langzeit-zuverlässige Schweißverbindungen zwischen den Polen und den Zellenverbindern, etwa zum Aufbau von Hochleistungs-Stacks aus Lithium-Ionen-Batterien für die E-Mobilität, bedingen hinsichtlich ihrer physikalischen Eigenschaften artgleiche, mechanisch und elektrisch verträgliche Verbindungspartner für einen langzeit-zuverlässigen kraft- oder stoffschlüssigen Anschluss des Zellenverbinders an die Pole. Die erforderliche Verträglichkeit ist aber im Allgemeinen, etwa bei Kupfer und Kupferlegierungen gegenüber Aluminiumwerkstoffen wie sie am häufigsten als Materialien der Zellen-Pole anzutreffen sind, gerade nicht gegeben. Schraubverbindungen, andererseits, stellen hinsichtlich der logistischen Anforderungen im Fertigungsprozessablauf eine grundsätzlich nachteilige Verbindungstechnik dar; abgesehen davon, dass ihre Übergangswiderstände relativ hoch sind und sich im Laufe der Betriebszeit mangels Dauerstabilität des Andruckes der Verschraubungen zwischen Polen und Zellenverbindern noch verschlechtern.

Deshalb sind nach der DE 10 2010 013 351 A1 Zweistoff-Zellenverbinder aus plattenförmig einander überragenden Bauteilen der unterschiedlichen Pol-Materialien im Laserinduktionsschweißverfahren stoffschlüssig und damit elektrisch leitend zusammengefügt. So kann bei einer Zellen-Serienschaltung jeder Pol an Zellenverbinder-Material mit zum Pol-Material jedenfalls im Wesentlichen artgleichem Werkstoff unmittelbar angeschlossen, auch dauerhaft verbindungsstabil verschweißt, werden. Vergleichbar damit ist nach der DE 10 2010 002 938 A1 vorgesehen, für Überlappung der beiden unterschiedlichen Materialien im Mittenbereich zwischen den Stirnenden des Zellenverbinders auf eine Walz-Plattierung unterschiedlicher Bleche zurückzugreifen, etwa einer Kupferauflage auf einem Aluminiumträger. Dann steht zwar originär an jedem Stirnende des Zellenverbinders das gleiche Material an. Aber im Bereich unter einem der Stirnenden wird die untere Schicht spanend abgetragen, bis hier das andere (in der Plattierung darüber liegende) Material für den Anschluss an den Pol artgleichen Materials freigelegt ist. So können die beiden Pole unterschiedlichen Materiales (in dieser Konstellation: Kupfer und Aluminium) jeweils direkt an das stofflich zugeordnete Stirnende des Zellenverbinders angeschlossen werden.

Aus der DE 10 2010 045 037 A1 ist ein Zweistoff-Zellenverbinder bekannt, der aus einem Kupferkabel und an dessen beiden Enden angecrimpten Metallplatten besteht. Die eine Metallplatte besteht komplett aus Kupfer, während die andere Metallplatte zweiteilig ausgeführt ist. Der den Crimpbereich aufweisende Teil besteht aus Kupfer, während der an den Batteriepol anzuschließende Teil aus Aluminium besteht. Beide Teile sind stumpf bzw. flächig aneinandergefügt.

Die Schälfestigkeit solcher, technologisch anspruchsvoller und herstellungstechnisch aufwändiger, flächiger Verbindungen, zumal zwischen für die Verbindungstechniken an sich ungeeigneten Plattierungspartnern, lässt allerdings zu wünschen übrig. Daraus resultieren schlechte mechanische Formgebungsmöglichkeiten und - zumal unter Vibrations-Dauerbeanspruchung des derart aufgebauten Zellenverbinders - eine schleichende Vergrößerung des elektrischen Übergangswiderstandes über die plattierte Kontaktfläche hinweg. Letzteres hat, angesichts der hohen Durchgangsströme, eine starke joulsche Erwärmung gerade des plattierten Verbindungsbereiches zur Folge, die dessen Langzeitstabilität zusätzlich beeinträchtigt.

In der DE 24 15 675 A1 ist eine Anschlussklemme mit einer rohrförmigen Zwinge aus einem relativ weichen Metall wie z. B. Kupfer oder Aluminium beschrieben, in welche sowohl feste als auch verlitzte Aluminiumleiter eingeschoben und durch Andrücken der Anschlussklemme an den Leiter befestigt werden können.

In Erkenntnis solcher Gegebenheiten liegt vorliegender Erfindung die technische Problemstellung zugrunde, ein System aus Zellen und einem Verbundstoff-Zellenverbinder anzugeben, das sich durch langzeitstabil günstiges Strom-Übergangsverhalten auszeichnet.

Diese Aufgabe ist erfindungsgemäß durch die im Hauptanspruch angegebenen Merkmale gelöst. Danach ist der Verbundstoff-Zellenverbinder mit seinen, bezüglich der beiden anzuschließenden, unterschiedliche Materialien aufweisenden oder aus unterschiedlichen Materialien bestehenden Pole einer Zellen-Serienschaltung jeweils bzgl. des Materials artgleichen, Zellenverbinder-Stirnenden nun nicht mehr als mechanisch starres Mehrstoffelement ausgelegt, sondern als Strang aus zwei Bündeln elektrisch leitender, unisoliert längs einander sich erstreckender Litzen (im Sinne jeweils dünner einzelner oder miteinander verdrillter Drähte) aus den beiden Pol-Materialien. Die Längen der zahlreichen einander in Längsrichtung lang überlappenden Litzen ergeben einen niedrigen Übergangswiderstand. Diese beiden, etwa gleich langen, Litzen-Bündel unterschiedlicher Materialien sind axial derart gegeneinander versetzt (sozusagen axial auseinander gezogen), dass am einen Stirnende des Zellenverbinder-Stranges nur Litzen des einen Verbundpartners herausragen, und gegenüberliegend aus dem anderen Stirnende des Zellenverbinder-Stranges nur die Litzen des anderen Verbundpartners.

Solch ein Zellenverbinder-Strang, aus zwei axial gegeneinander versetzt einander axial überlappenden Litzen-Bündeln, kann durch ein Drahtzieherwerkzeug gezogen oder anderweitig einem radialen Pressdruck ausgesetzt werden. Daraus resultiert eine Steigerung des Übergangsleitwertes zwischen den Litzen-Mantelflächen der beiden Bündel; gegebenenfalls bis hin zu Kaltverschweißen der Litzen untereinander längs ihrer Mantelflächen im Innern dieses Verbundstoff-Stranges.

Eine Verbesserung des Füllfaktors des Strang-Querschnittes mit der Folge einer weiteren Erniedrigung der Übergangswiderstände zwischen den gestreckten Einzellitzen ergibt sich, wenn die Litzen einen etwa rechteckigen oder achteckigen Querschnitt aufweisen. In verbleibende Längshohlräume zwischen den Litzen kann elektrisch gut leitender lotähnlicher Werkstoff eingebracht werden; allerdings nur in so geringer Menge, dass dadurch der direkte Kontakt längs der Litzen-Mantelflächen nicht unterbunden wird.

Jedenfalls ist in einem derartigen Strang aus Litzen-Bündeln unterschiedlicher Materialien ein niedrigerer elektrischer Übergangswiderstand erzielbar, als mittels der erörterten Walzplattierung zweier artungleicher Bleche aufeinander.

Die resultierende Biegesteifigkeit des Zellenverbinder-Stranges lässt sich in Abhängigkeit von der Leitfähigkeit im Innern des Stranges über den Verschweißungsgrad zwischen den Litzen beeinflussen. Durch lediglich regionales Kaltverschweißen infolge radialer Energieeinbringung in nur begrenzte Litzen-Abschnitte kann die verbleibende Biegsamkeit des Zellenverbinders zusätzlich gezielt beeinflusst werden.

Weitere Optimierungs-Parameter für das mechanische und elektrische Verhalten des Zellenverbinder-Stranges sind, abgesehen von den Materialien für die beiden Litzen-Bündel, die Stärken und dir Anzahl der Litzen im Bündel. Etwaige thermisch bedingte lokale Spannungen infolge unterschiedlicher Temperaturkoeffizienten der Litzen-Materialien werden problemlos durch leichtes Ausknicken einzelner der Litzen in nicht starr eingefassten Bereichen aufgenommen.

Wenn die Mantelfläche des Stranges durch eine enge Lage artgleicher Litzen gegeben ist, können diese zu einer korrosionsdicht die Verbundstoff-Litzen umgebenden Hülle druckverschweißt werden. Stattdessen oder zusätzlich kann auch eine Hülse auf den Strang axial aufgezogen und radial aufgeschrumpft oder ein Schlauch übergezogen und an beiden Enden gegen die Litzen-Bündel, insbesondere gegen Feuchtigkeitseintritt, abgedichtet werden.

Die beiderseits aus dem Strang axial hervorstehenden Litzen-Enden können zu jeweils einem starren Stumpf umgeformt werden, der sich leichter als viele einzelne Litzen-Enden verbindungstechnisch handhaben lässt. Stattdessen oder zusätzlich kann auf die beiden axial aus dem Strang hervorstehenden Litzen-Enden eine jeweils artgleiche Kappe, vorzugsweise ausgestattet mit Anschlussprofilen, aufgeschrumpft oder aufgecrimpt werden.

Gemäß einer anderen Weiterbildung der Erfindung erfolgt der Stromübergang über die Litzen ungleichen Materials in dem Sinne nur mittelbar, dass Einzellitzen oder Litzen-Bündel aus den beiden Materialien in die beiden offenen Stirnenden von Röhrchen eingeführt und darin unter axialer Distanz radial verpresst sind; mit aus den Stirnenden der Röhrchen vorkragenden Litzen-Enden zum Anschluss an den Zellenpol gleichen Materials etwa wieder über eine aufgeschrumpfte Profil-Kappe. Der Verbinder-Strang ist dann durch wenigstens ein derart bestücktes Röhrchen dargestellt.

Wenn die artungleichen Litzen-Materialien untereinander berührungskritische Eigenschaften aufweisen, können die dadurch überwunden werden, dass für diese Röhrchen ein Material gewählt wird, das sich einerseits gegenüber dem einen Litzen-Material und gleichzeitig andererseits gegenüber dem anderen Litzen-Material unkritisch verhält.

Wenn aus dem Material eines der Pole ein Rohr gefertigt ist, dann kann es den Part der artgleichen Litzen übernehmen und direkt mit einem Anschlussprofil für Anschluss an den artgleichen Pol ausgelegt sein. Im Innern führt dieses den Verbinder-Strang repräsentierende Rohr dann nun nur das Bündel mit den Litzen aus dem Material für den Anschluss an den anderen Pol.

Die Litzen müssen im Rahmen dieser Erfindung nicht unbedingt linear gestreckt im Strang vorliegen, sie können (bis auf ihre aus dem Strang vorkragenden Enden) auch zu einem länglichen Gewirke oder dergleichen Maschenware miteinander verstrickt sein.

Die beiden unterschiedlichen Materialien sind dann zweckmäßigerweise für die beiden Längshälften der Wirkware verwendet.

Zusätzliche Weiterbildungen und weitere Alternativen zur erfindungsgemäßen Lösung ergeben sich aus den weiteren Ansprüchen und, auch hinsichtlich deren Vorteilen, aus nachstehender Beschreibung bevorzugter Ausführungsbeispiele zur Erfindung. In der Zeichnung zeigt, auf das Funktionswesentliche abstrahiert und nicht maßstabsgerecht skizziert,
- Fig.1: als Zellenverbinder im Längsschnitt einen Strang mit zwei Litzen-Bündeln,
- Fig.2: den Strang aus Fig.1 im Querschnitt im Bereich nur eines der Litzen-Bündel,
- Fig.3: einen Strang mit zwei Litzen-Bündeln in einem Röhrchen im Längsschnitt und
- Fig.4: im Längsschnitt ein Zellenverbinder-Rohr mit einem Litzen-Bündel.

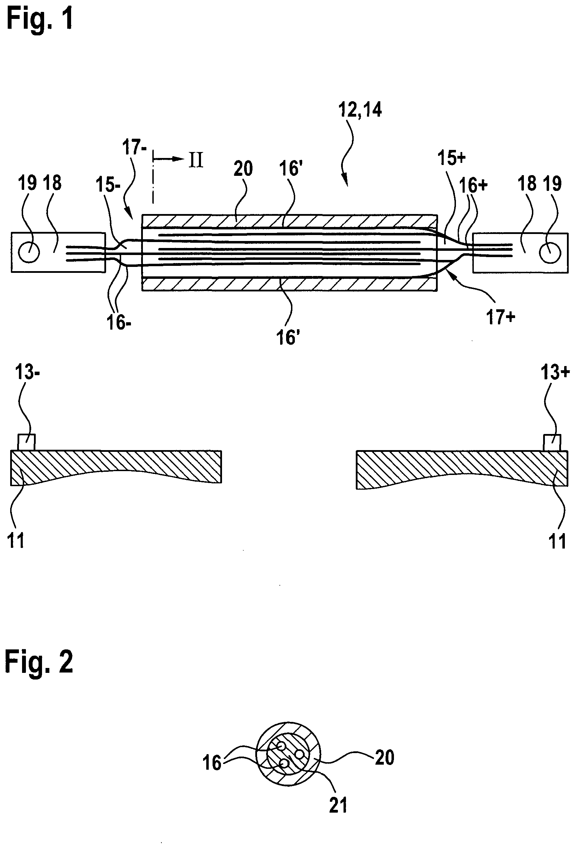

In Fig.1 der Zeichnung sind zwei Primär- oder Sekundär-Zellen 11, insbesondere Lithium-Zellen 11 angedeutet, die über einen Zellenverbinder 12 in Reihe (Serie) geschaltet werden sollen. Dafür muss der Zellenverbinder 12 den positiven Pol 13+ der einen Zelle 11 mit dem negativen Pol 13- der anderen Zelle 11 elektrisch zusammenschalten. Die Pole 13 bestehen nach Maßgabe der Elektroden im Innern der Zellen 11 aus unterschiedlichen Materialien, etwa Kupfer und Aluminium. Die Serienschaltung erfolgt deshalb über einen Verbundstoff-Zellenverbinder 12 mit einem Strang 14 aus zwei im Wesentlichen parallel zueinander sich erstreckenden und längsseits untereinander sich berührenden Bündeln 15 von unisolierten Litzen 16+, 16- unterschiedlicher Materialien, in diesem Falle bevorzugt wiederum Kupfer und Aluminium. Die beiden Litzen-Bündel 15+, 15- weisen etwa gleiche Längen auf; aber sie sind, etwa durch axiales Auseinanderziehen, im Strang 14 axial derart gegeneinander versetzt, dass der Strang 14 am einen Stirnende 17+ nur Litzen 16+ des einen Materials und gegenüberlegend nur Litzen 16-des anderen Materiales aufweist. Diese Bündel 15+, 15- werden mechanisch zuverlässig und elektrisch niederohmig an die damit materialgleichen Pole 13+, 13- angeschlossen, etwa verschweißt.

Für einfachere Handhabbarkeit der jeweils aus dem Strang 14 als Bündel 15 austretenden Litzen 16 können diese zwischen den Strang-Stirnenden 17 und den freien Enden der Litzen 16 durch Umformen radial gestaucht und / oder je mit einer Kappe 18 bestückt werden. Im skizzierten Beispielsfalle weisen die Kappen 18 Anschlussprofile 19 zum Verbinden mit den Polen 13 auf.

In Fig.1 ist symbolisch berücksichtigt, dass es zum Abdichten des Stranges 14 gegen äußere atmosphärische Einflüsse wie Feuchtigkeit zweckmäßig sein kann, quasi als Außenmantelfläche des Stranges 14 eine dichte Lage von Litzen 16' untereinander gleichen Materials anzuordnen und miteinander etwa durch Druck und / oder Vibration längs ihren Litzen-Mantelflächen zu einem Hohlzylinder miteinander zu verschweißen. Stattdessen oder zusätzlich kann ein Schutzschlauch mit Endabdichtungen (nicht gezeichnet) über den Strang 14 mit seinen Litzen-Bündeln 15 gezogen werden. Außerdem kann eine, Radialdruck auf den Strang 14 ausübende, Hülse 20 aufgezogen und gegebenenfalls nachträglich radial gestaucht werden. Noch zwischen den Litzen-Bündeln 15+, 15- im Strang 14 verbleibende Freiräume können zu weiterer Steigerung des ÜbergangsLeitwertes im Strang 14 mit lotähnlichem elektrisch leitendem Überbrückungsmaterial 21 (Fig.2) aufgefüllt werden.

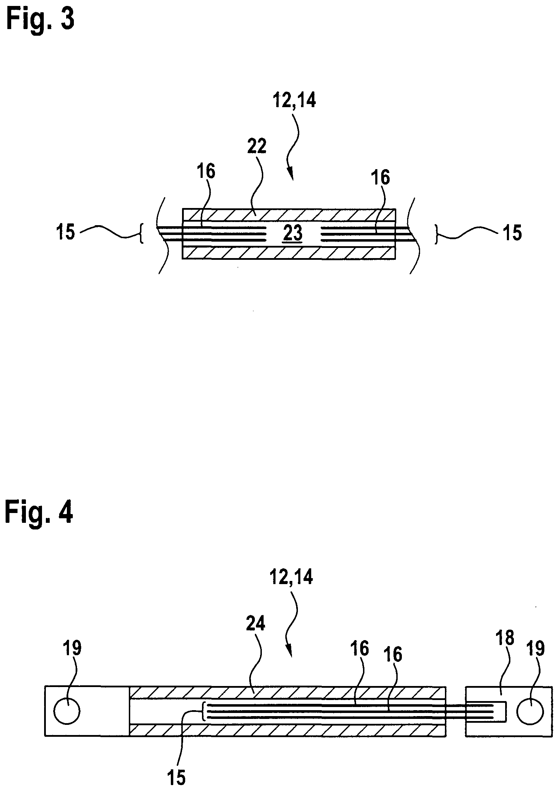

Im Beispielsfalle der Fig.3 erfolgt der Stromübergang nicht unmittelbar über Längsberührungen zwischen den Litzen 16+, 16-, sondern mittelbar über wenigstens ein dünnes Röhrchen 22 (vorzugsweise handelt es sich um eine Mehrzahl davon, die dann den Strang 14 ausmachen). Das Material der Röhrchen 22 ist mit jedem der beiden Materialien der Litzen 16+, 16- verträglich. In jedes der Röhrchen 22 sind, von beiden offenen Stirnenden her, die Litzen 16+ beziehungsweise 16- axial eingeführt, aber unter Einhalten eines axialen Abstandes 23 voneinander innerhalb des Röhrchens 22. Durch dessen radiales Stauchen werden die Litzen 16 darin axial festgelegt, unter Reduzieren des Übergangswiderstandes von den Litzen 16 zur Innenmantelfläche des Röhrchens 22. Der Stromfluss läuft also nun nicht mehr direkt zwischen den Litzen 16+, 16-, sondern über das Röhrchen 22.

Schließlich ist in Fig.4 eine dahin gehende Abwandlung der erfindungsgemäßen Lösung skizziert, bei der ein stirnseitig mit einem Anschlussprofil 19 ausgestattetes Rohr 24 aus einem der polverträglichen Materialien besteht, weshalb es nur das Litzen-Bündel 15 des anderen Materials aufnimmt und radial einfasst.

Ein Mehrstoff-Zellenverbinder 12 für materialverträglichen Anschluss an die unterschiedlichen Materialien der beiden Pole 13 von in Serie zu schaltenden Zellen 11 ist also erfindungsgemäß im Prinzip als Strang 14 aus zwei Bündeln 15 von axial gegeneinander versetzt sich längsseits berührenden Litzen 16 aus mit den Polen 13 verträglichen Materialien ausgelegt, die im Interesse niedrigen Übergangswiderstandes zumindest bereichsweise miteinander kaltverschweißt sein können.

### Bezugszeichenliste

- 11: Zelle
- 12: Zellenverbinder (14 an 13-13, zwischen 11-11)
- 13: Pole (von 11)
- 14: Strang (aus 15, als 12)
- 15: Bündel (aus 16)
- 16: Litzen (in 15)
- 17: Stirnende (von 14)
- 18: Kappe (auf 16 vor 17)
- 19: Anschlussprofil (an 18)
- 20: Hülse (über 14)
- 21: Überbrückungsmaterial (in 14 / 15)
- 22: Röhrchen (mit 16)
- 23: Abstand (zwischen 16-16 in 22)
- 24: Rohr (mit 15)

## Patentansprüche

1. System aus Zellen (11) und einem Mehrstoff-Zellenverbinder (12), wobei der Mehrstoff-Zellenverbinder (12) an unterschiedliche Materialien aufweisende Pole (13) der Zellen (11) angeschlossen ist und **gekennzeichnet ist durch** einen Litzen-Strang (14) mit zwei Litzen-Bündeln (15) aus unterschiedlichen Materialien, wobei das eine Litzen-Bündel (15) aus dem Material des einen Pols (13) und das andere Litzen-Bündel (15) aus dem Material des anderen Pols (13) besteht.

2. System nach dem vorangehenden Anspruch, **dadurch gekennzeichnet, dass** gegeneinander axial versetzte, aber noch einander axial überlappende Bündel (15) von Litzen (16) im Strang (14) vorgesehen sind.

3. System nach einem der vorangehenden Ansprüche, **dadurch gekennzeichnet, dass** eine äußere dichte Lage von Litzen (16) untereinander gleichen Materiales den Strang (14) umgibt.

4. System nach einem der vorangehenden Ansprüche, **dadurch gekennzeichnet, dass** der Strang (14) radial von einem Schlauch oder einer Hülse (20) umgeben ist.

5. System nach einem der vorangehenden Ansprüche, **dadurch gekennzeichnet, dass** in Freiräume zwischen den Litzen (16) lotähnliches Überbrückungsmaterial (21) eingebracht ist.

6. System nach einem der vorangehenden Ansprüche, **dadurch gekennzeichnet, dass** die beiderseitigen Stirnenden (17) der Bündel (15) umgeschmolzen und / oder je mit einer Kappe (18) versehen sind.

7. System nach dem vorangehenden Anspruch, **dadurch gekennzeichnet, dass** die Kappe (18) mit einem Anschlussprofil (19) ausgestattet ist.

8. System nach einem der vorangehenden Ansprüche, **dadurch gekennzeichnet, dass** Bündel (15) axial gegeneinander distanziert in Röhrchen (22) angeordnet sind.

## Claims

1. System comprising cells (11) and a composite cell connector (12), the composite cell connector (12) being connected to poles (13) of the cells (11) that comprise different materials and **characterized by** a litz-wire strand (14) with two bundles of litz wires (15) of different materials, the one bundle of litz wires (15) consisting of the material of one pole (13) and the other bundle of litz wires (15) consisting of the material of the other pole (13).

2. System according to the preceding claim, **characterized in that** bundles (15) of litz wires (16) which are axially offset from one another but still axially overlap one another are provided in the strand (14).

3. System according to one of the preceding claims, **characterized in that** an outer impermeable layer of litz wires (16) of the same material as one another surrounds the strand (14).

4. System according to one of the preceding claims, **characterized in that** the strand (14) is radially surrounded by a tube or a sleeve (20).

5. System according to one of the preceding claims, **characterized in that** solder-like bridging material (21) is incorporated in clearances between the litz wires (16).

6. System according to one of the preceding claims, **characterized in that** the ends (17) on both end faces of the bundles (15) are remelted and/or each provided with a cap (18).

7. System according to the preceding claim, **characterized in that** the cap (18) is provided with a connection profile (19).

8. System according to one of the preceding claims, **characterized in that** bundles (15) are arranged axially spaced apart from one another in tubes (22).

## Revendications

1. Système composé d'éléments (11) et d'un connecteur d'éléments en substances multiples (12), le connecteur d'éléments en substances multiples (12) étant connecté à des pôles (13) des éléments (11) présentant différents matériaux et **se caractérisant par** un tronçon de torons (14) avec deux faisceaux de torons (15) composés de différents matériaux, un faisceau de torons (15) se composant du matériau d'un pôle (13) et l'autre faisceau de torons (15) se composant du matériau de l'autre pôle (13).

2. Système selon la revendication précédente, **caractérisé en ce que** des faisceaux (15) de torons (16) décalés axialement l'un par rapport à l'autre mais se chevauchant encore axialement sont prévus dans le tronçon (14).

3. Système selon l'une des revendications précédentes, **caractérisé en ce qu'**une couche étanche extérieure de torons (16) d'un matériau identique entoure le tronçon (14).

4. Système selon l'une des revendications précédentes, **caractérisé en ce que** le tronçon (14) est entouré radialement par un tuyau ou un manchon (20).

5. Système selon l'une des revendications précédentes, **caractérisé en ce qu'**un matériau de pontage (21) semblable à du matériau de brasage est mis en place dans des espaces libres entre les torons (16).

6. Système selon l'une des revendications précédentes, **caractérisé en ce que**, des deux côtés, les deux extrémités frontales (17) des faisceaux (15) sont refondues et/ou munies respectivement d'un capuchon (18).

7. Système selon la revendication précédente, **caractérisé en ce que** le capuchon (18) est équipé d'un profilé de connexion (19).

8. Système selon l'une des revendications précédentes, **caractérisé en ce que** des faisceaux (15) sont disposés à distance axialement les uns des autres dans des tubulures (22).
